# EUROPEAN PATENT APPLICATION

(11) **EP 4 443 393 A1**
(43) Date of publication of application: **09.10.2024**
(21) Application number: 22901440.2
(22) Date of filing: 02.12.2022
(51) Int. Cl.: G06T 13/40, G06F 3/01, G06F 3/04815, G06F 3/16, G06T 19/00

(54) **DISPLAY CONTROL DEVICE**

(30) Priority: 03.12.2021 JP 2021197063
(71) Applicant: AISIN CORPORATION, Aichi 448-8650 (JP); Garateacircus Co., Ltd., Shibuya-ku, Tokyo 150-0031 (JP)
(72) Inventor: OSUGA Shin, Kariya-shi, Aichi 448-8650 (JP); TANAKA Godai, Kariya-shi, Aichi 448-8650 (JP); NABEKURA Ayana, Kariya-shi, Aichi 444-0027 (JP); NAKANO Ryota, Kariya-shi, Aichi 444-0027 (JP); WATANABE Ryota, Kariya-shi, Aichi 444-0027 (JP); SATO Tatsuya, Kariya-shi, Aichi 444-0027 (JP); ISHIKAWA Teruyuki, Tokyo 150-0031 (JP); ISHIKAWA Yuka, Tokyo 150-0031 (JP)
(74) Representative: TBK
(86) International application number: PCT/JP2022/044554
(87) International publication number: WO 2023/101010

(57) **Abstract**

A PU (22) executes control to display an agent image (14) on a display unit (12). The PU (22) uses data obtained by mapping 2D texture data (24d) to a 2D model for a torso and head of the agent image (14). The PU (22) uses data obtained by mapping 3D texture data (24e) to a 3D model specified by 3D model data (24c) for eyes, a mouth, and eyebrows of the agent image (14).

## Description

### TECHNICAL FIELD

The present invention relates to a display control device.

### BACKGROUND ART

For example, Patent Literature 1 below describes a display control device that displays a virtual character. In this display control device, textures corresponding to vowels of "A", "I", "U", "E", and "O" are stored in advance in a memory. Then, the display control device extracts vowel sound from input sound. The display control device changes a texture of a mouth shape matching the extracted vowel sound by pasting the texture to a mouth shape of the virtual character.

### CITATIONS LIST

### PATENT LITERATURE

Patent Literature 1: JP 2021-56818 A

### SUMMARY OF INVENTION

### TECHNICAL PROBLEMS

By the way, in an interaction between the virtual character and a human, in a case where a lip synchronization of the virtual character cannot be performed in real time, there may be a delayed interaction or misunderstanding. However, in a case where a high-definition three-dimensional character is drawn, computational load on a computer is very large. Therefore, it is difficult to draw a highly accurate three-dimensional character in real time.

### SOLUTIONS TO PROBLEMS

Hereinafter, solutions to the above-described problems, and functions and effects thereof will be described.

A display control device that solves the above-described problem includes a storage device and an execution device, in which the storage device stores 2D texture data that is a plurality of texture data related to an agent, and 3D texture data that is data different from the 2D texture data and is data including texture data of an eye portion and mouth portion of the agent, the agent is a person who interacts with a user, the 2D texture data includes a plurality of pieces of data indicating mutually different postures of the agent, the 3D texture data includes a plurality of pieces of data of an eye portion and mouth portion indicating each of mutually different facial expressions of the agent, the execution device executes 2D mapping processing, 3D mapping processing, and display processing, the 2D mapping processing is processing of mapping, to a 2D model, a piece of data selected from among a plurality of posture data included in the 2D texture data, the 3D mapping processing is processing of mapping, to a 3D model, a piece of data of a facial expression selected from among a plurality of facial expressions included in the 3D texture data, and the display processing is processing of displaying, on a display unit, image data obtained by combining image data subjected to the 2D mapping processing with image data subjected to the 3D mapping processing.

In the above-described configuration, by representing a posture of the agent by mapping a texture for 2D to the 2D model, computational load of the execution device can be reduced as compared with a case where a texture is mapped to the 3D model. Meanwhile, in the above-described configuration, a texture is mapped to the 3D model for the eye and mouth portions. As a result, power of facial expressions of the agent can be enhanced as compared with a case where the eye and mouth portions are also 2D models.

In the above-described display control device, the 3D texture data preferably includes a plurality of pieces of data of an eyebrow portion, the plurality of pieces of data indicating each of mutually different facial expressions of the agent.

In the above-described configuration, power of facial expressions of the agent can be enhanced by using the 3D model also for eyebrows, as compared with a case where the 2D model is used.

In the above-described display control device, the storage device preferably stores 3D model data to which the 3D texture data is mapped, data of a mouth portion among the 3D texture data preferably includes data of a jaw portion, data of the jaw portion preferably includes data of a state where a mouth is closed and data of a state where a mouth is open, and the 3D model to which data of the jaw portion in a state where the mouth is closed is mapped and the 3D model to which data of the jaw portion in a state where the mouth is open is mapped are preferably the same model.

A position of a tip portion of a jaw is different between when the mouth is open and when the mouth is closed. However, in the above-described configuration, the same 3D model is intentionally used for when the mouth is open and when the mouth is closed. As a result, computational load for display can be reduced as compared with a case where the 3D model can be deformed according to opening and closing of the mouth. Moreover, power of facial expressions around the mouth can be enhanced by using the 3D model, as compared with a case where the 2D model is used.

In the above-described display control device, the storage device preferably stores specification data that is data in which a position and rotation angle of the 3D model are specified for each of mutually different postures of the agent, the postures being indicated by the 2D texture data, and the 3D mapping processing is preferably processing of mapping the 3D texture data to the 3D model on the basis of the specification data.

In the above-described configuration, the 3D model can be matched by using the specification data in which the position and rotation angle of the 3D model are specified for each posture of the agent, even if the posture of the agent changes. Therefore, of the 3D texture data, data to be mapped can be matched with the change in the posture of the agent.

In the above-described display control device, the 3D texture data stored in the storage device is preferably pre-rendered data.

In the above-described configuration, when the agent image is displayed, time required for rendering can be saved by storing the pre-rendered data in advance.

In the above-described display control device, the second storage device preferably includes a first storage device and a second storage device, the first storage device preferably stores the 3D texture data at all times, the execution device preferably executes write processing, the write processing is preferably processing of writing, to the second storage device, the 3D texture data stored in the first storage device, and the 3D mapping processing is preferably processing of mapping the 3D texture data to the 3D model by using the 3D texture data written to the second storage device.

In the above-described configuration, if time required for processing of reading data from the second storage device is short, the agent can be promptly displayed. Therefore, it is possible to reduce requests for reading operation or the like of the first storage device that stores the 3D texture data at all times.

In the above-described display control device, the execution device preferably executes 2D selection processing of selecting, according to an interaction with the user, data to be utilized for the 2D mapping processing, from among a plurality of pieces of data indicating mutually different postures of the agent, and 3D selection processing of selecting, according to an interaction with the user, data to be utilized for the 3D mapping processing, from among a plurality of pieces of data indicating each of mutually different facial expressions of the agent.

According to the above-described configuration, the posture and facial expression of the agent can be appropriate corresponding to the interaction with the user.

### BRIEF DESCRIPTION OF DRAWINGS

FIG. 1 is a block diagram showing a configuration of an interaction unit according to an embodiment.
FIG. 2 is a flowchart showing a procedure of processing executed by a control device according to the embodiment.
FIG. 3 is a diagram showing a 3D model according to the embodiment.
FIG. 4 is a diagram showing 2D texture data according to the embodiment.
FIG. 5 is a diagram showing 3D texture data according to the embodiment.
FIG. 6 is a flowchart showing a procedure of processing executed by the control device according to the embodiment.
FIGS. 7A to 7E are diagrams exemplifying utilization of the 3D texture data according to the embodiment.

### DESCRIPTION OF EMBODIMENTS

Hereinafter, an embodiment will be described with reference to the drawings.

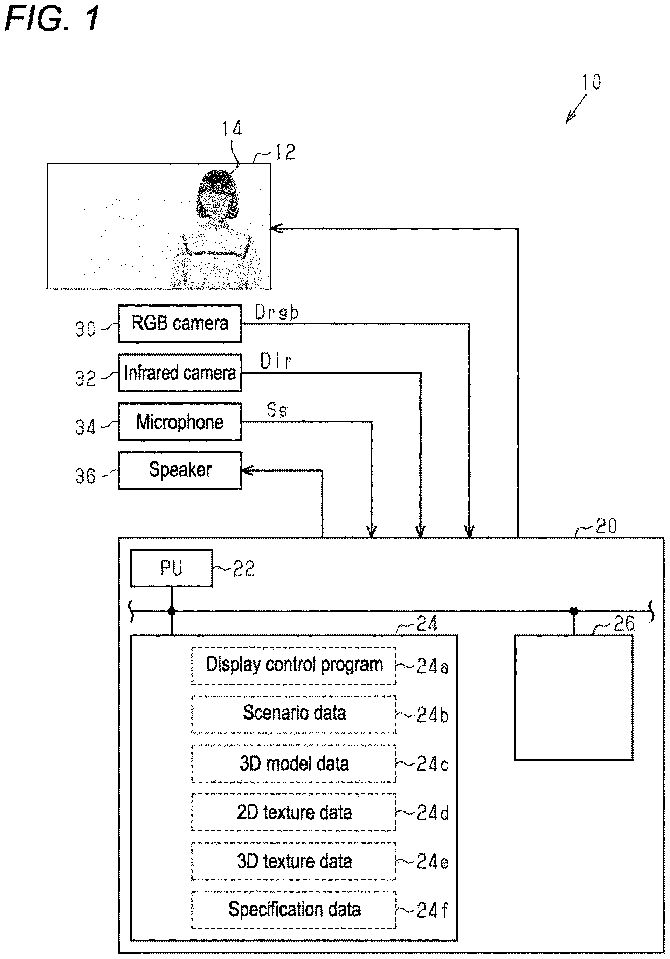

An interaction unit 10 shown in FIG. 1 includes a display unit 12. The display unit 12 is a display panel including, for example, an LCD, an LED, or the like. The display unit 12 displays an agent image 14 that is an image of a virtual person who interacts with a user.

A display control device 20 controls an image displayed on the display unit 12 by operating the display unit 12. At this time, the display control device 20 refers to RGB image data Drgb output from an RGB camera 30 in order to control the image. The RGB camera 30 is disposed facing a direction in which the user is expected to be positioned. The RGB image data Drgb includes luminance data of each of three primary colors of red, green, and blue. Furthermore, the display control device 20 refers to infrared image data Dir output from an infrared camera 32 in order to control the image. The infrared camera 32 is also disposed facing the direction in which the user is expected to be positioned. Furthermore, the display control device 20 refers to a sound signal Ss output from a microphone 34 in order to control the image. The microphone 34 is provided to sense a sound signal generated by the user.

The display control device 20 outputs the sound signal by operating a speaker 36 in accordance with a motion of the agent image 14.

The display control device 20 includes a PU 22, a storage device 24, and a storage device 26. The PU 22 is a software processing device including at least one of a CPU, a GPU, a TPU, and the like. The storage device 24 stores a display control program 24a and scenario data 24b. The storage device 26 is a device having higher operation speed than the storage device 24 does. The operation speed includes speed of reading stored data and speed of writing data.

The scenario data 24b includes a finite automaton. The scenario data 24b is data that determines a plurality of states that specify content of an utterance by an agent and a motion of the agent. The PU 22 causes the agent to interact with the user according to the scenario data 24b. That is, the PU 22 performs sound recognition by using the sound signal Ss as an input, and generates text data indicating the content of the utterance by the user. Furthermore, the PU 22 recognizes a motion of the user by using the RGB image data Drgb and the infrared image data Dir. Then, the PU 22 determines whether or not an input, which is text data and a recognition result of the motion of the user, satisfies a transition condition of a state specified by the scenario data 24b. In a case where the PU 22 determines that the content of the utterance by the user and the motion of the user satisfy the transition condition, the PU 22 operates the display unit 12 according to the motion of the agent specified in a state of a transition destination. As a result, the agent image 14 is controlled. Furthermore, the PU 22 operates the speaker 36 according to utterance content specified in the state of the transition destination. As a result, the agent utters words to the user.

The agent image 14 expresses rich facial expressions in real time according to the interaction with the user. This is achieved by "pre-processing for image display" and "processing related to image display". Hereinafter, these will be described in order.

### "Pre-processing for image display"

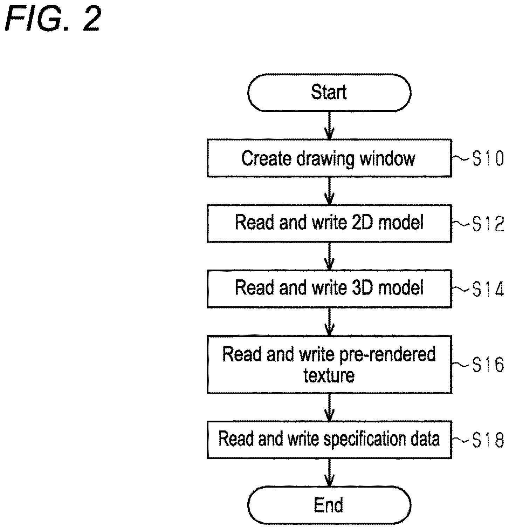

FIG. 2 shows a procedure of pre-processing for image display. The processing shown in FIG. 2 is achieved by the PU 22 repeatedly executing the display control program 24a stored in the storage device 24 at a predetermined cycle, for example. Note that, in the following, a step number of each piece of the processing is denoted by a number to which "S" is added at the beginning thereof.

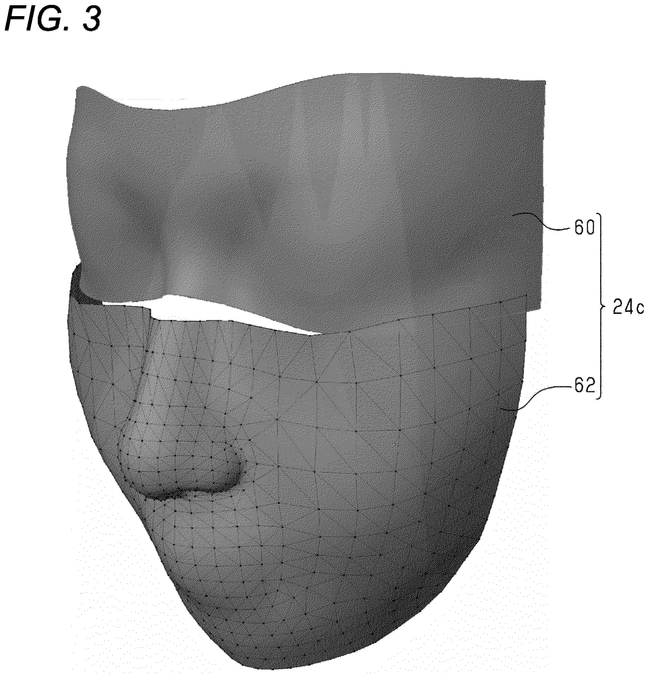

In a series of processing shown in FIG. 2, the PU 22 first creates a drawing window for displaying the agent image 14 on the display unit 12 (S10). Next, from the storage device 24, the PU 22 reads a 2D model for generating the agent image 14 (S12). This processing includes processing in which the PU 22 writes, to the storage device 26, data that specifies the 2D model. The 2D model is a two-dimensional model mainly utilized for displaying the torso, the head, and the like of the agent indicated by the agent image 14. Furthermore, from the storage device 24, the PU 22 reads 3D model data 24c that specifies the 3D model (S14). This processing includes processing in which the PU 22 writes, to the storage device 26, the 3D model data 24c. The 3D model is a three-dimensional model utilized to generate an image of eye, mouth, and eyebrow portions particularly affecting a facial expression of the agent in the agent image 14. FIG. 3 exemplifies 3D model data 24c.

As shown in FIG. 3, the 3D model data 24c is data that specifies an upper face model 60 and a lower face model 62. The upper face model 60 is a model for representing the eye and eyebrow portions of the agent. The lower face model 62 is a portion including a mouth of the agent. The lower face model 62 includes jaw and cheek portions. The 3D model data 24c is a polygon model. FIG. 3 exemplifies a polygon having three vertices, as an example of the lower face model 62.

Note that the 3D model data 24c does not model an actual shape of the agent. For example, the lower face model 62 also includes a tip portion of a jaw when a mouth of the agent is open. However, image data of the agent with the mouth closed is also generated by using the same lower face model 62.

Returning to FIG. 2, the PU 22 reads 2D texture data 24d and 3D texture data 24e stored in the storage device 24 (S16). This processing includes processing in which the PU 22 writes the 2D texture data 24d and the 3D texture data 24e to the storage device 26. Both the 2D texture data 24d and the 3D texture data 24e are pre-rendered data. This intends to reduce time required for the PU 22 to execute rendering processing.

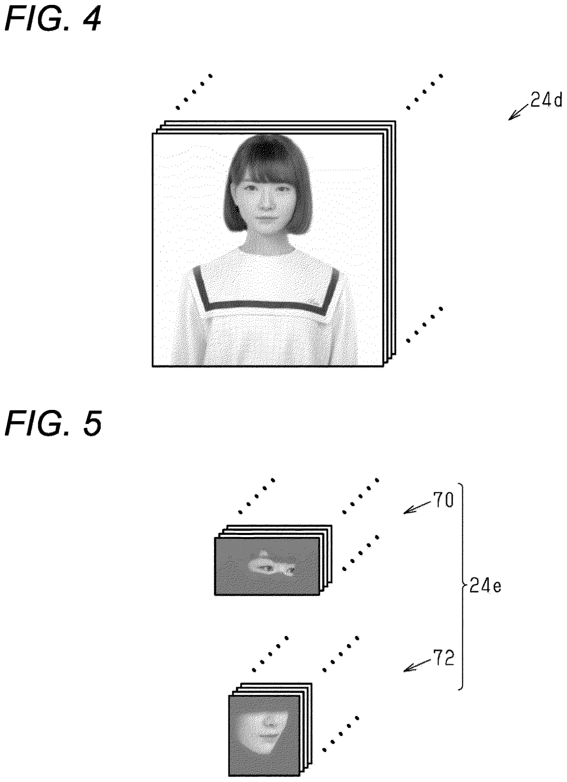

The 2D texture data 24d is data mapped to the 2D model. FIG. 4 exemplifies the 2D texture data 24d.

As shown in FIG. 4, the 2D texture data 24d includes a plurality of pieces of data selectively designated by a state specified by the scenario data 24b. Each of the data is data of when the agent is in a predetermined posture and motion. Postures and motions of the agent specified by the respective plurality of pieces of data are mutually different between the pieces of data.

The 3D texture data 24e is data to be mapped to the 3D model specified by the 3D model data 24c. FIG. 5 exemplifies the 3D texture data 24e.

As shown in FIG. 5, the 3D texture data 24e includes eye-portion data 70 and jaw-portion data 72. The eye-portion data 70 is data including eyes and eyebrows of the agent. The eye-portion data 70 includes a plurality of pieces of data selectively designated by a state specified by the scenario data 24b. Each of the data is data of when the agent has a predetermined facial expression. Facial expressions of the agent specified by each of the plurality of pieces of data are mutually different between the pieces of data.

The jaw-portion data 72 is data that includes the mouth, jaw, and a portion of a nose of the agent. The j aw-portion data 72 includes a plurality of pieces of data selectively designated by a state specified by the scenario data 24b. Each of the data is data of when the agent has a predetermined facial expression. Facial expressions of the agent specified by each of the plurality of pieces of data are mutually different between the pieces of data.

Returning to FIG. 2, the PU 22 reads specification data 24f stored in the storage device 24 (S18). This processing includes processing in which the PU 22 writes the specification data 24f to the storage device 26. The specification data 24f is data that specifies a position and rotation angle of 3D data included in the 2D texture data 24d for each of the data that specifies various postures and motions of the agent. The specification data 24f is data for matching the posture of the agent indicated by the 2D texture data 24d with the 3D model. This is because, for example, in a case where the positions and rotation angles of the 3D model are fixed for when the agent is facing obliquely and the agent is facing frontward, the posture of the agent indicated by the 2D texture data 24d and the 3D model do not match.

Note that, in a case where the PU 22 completes the processing in S18, the PU 22 once terminates the series of processing shown in FIG. 2.

### "Processing related to image display"

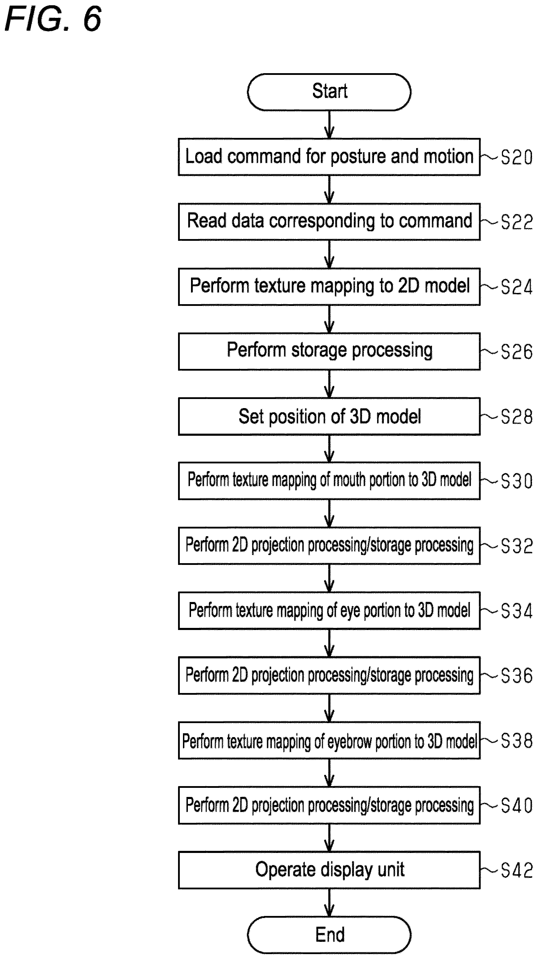

FIG. 6 shows a procedure of processing related to image display. The processing shown in FIG. 6 is achieved by the PU 22 repeatedly executing the display control program 24a at a predetermined cycle, for example.

In a series of processing shown in FIG. 6, first, the PU 22 loads a command for a posture and motion of the agent specified by a current state among states indicated by the scenario data 24b (S20). Next, from the storage device 26, the PU 22 reads data to be used for display among the 2D texture data 24d and data to be used for display among the 3D texture data 24e, on the basis of the command (S22).

Next, the PU 22 maps a texture read by the processing in S22 to the 2D model (S24). Then, the PU 22 stores data of the mapped texture in the storage device 26 (S26). Here, a storage area in which the data is stored is a part of an area in which image data displayed on the display unit 12 is stored.

Next, the PU 22 sets the position of the 3D model on the basis of the data read by the processing in S22 among the 2D texture data 24d, and the specification data 24f (S28). Then, to the 3D model, the PU 22 maps the jaw-portion data 72 among the 3D texture data read by the processing in S22 (S30). Next, the PU 22 performs processing of projecting a texture mapped to the 3D model onto 2D, and then stores the texture in the storage device 26 (S32). Here, the part of the area in which the data is stored by the processing in S26 becomes a storage target area. The processing in S32 is processing of superimposing data generated by projection processing on data stored in the target area by the processing in S26. Specifically, the processing in S32 is processing of increasing contribution of the data stored in the target area by the processing in S26, for an area that stores data closer to a border portion among data generated by the projection processing. This can be achieved by alpha blending processing or the like.

Furthermore, the PU 22 maps data of the eye portion to the 3D model, the data of the eye portion being among the 3D texture data 24e, specified as the eye-portion data 70, and read by the processing in S22 (S34). Next, the PU 22 performs processing of projecting the texture mapped to the 3D model onto 2D, and then stores the texture in the storage device 26 (S36). The processing in S36 is similar to the processing in S32.

Furthermore, the PU 22 maps data of the eye portion to the 3D model, the data of the eyebrow portion being among the 3D texture data 24e, specified as the eye-portion data 70, and read by the processing in S22 (S38). Next, the PU 22 performs processing of projecting the texture mapped to the 3D model onto 2D, and then stores the texture in the storage device 26 (S40). The processing in S40 is similar to the processing in S32.

Then, the PU 22 operates the display unit 12 to display, on the display unit 12, the data stored in the storage device 26 with the processing in S26, S32, S36, and S40 (S42).

Note that, in a case where the PU 22 completes the processing in S42, the PU 22 once terminates the series of processing shown in FIG. 6.

Here, functions and effects of the present embodiment will be described.

The PU 22 controls the posture and utterance of the agent according to a state specified by the scenario data 24b.

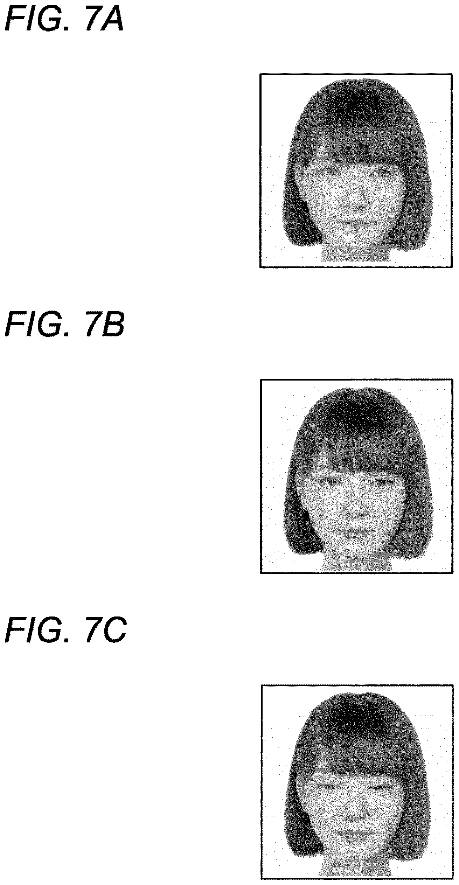

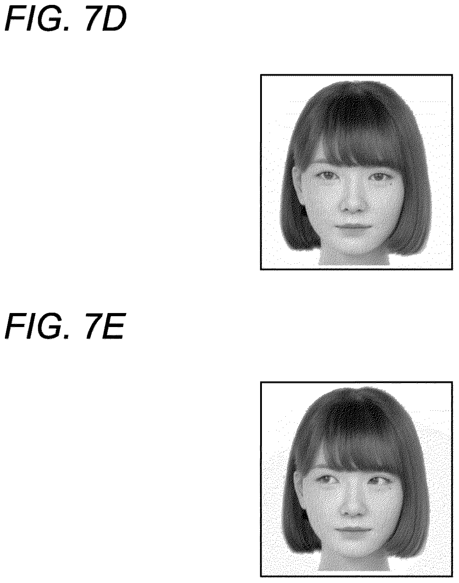

FIG. 7 exemplifies a part of five agent images 14 having mutually different facial expressions. FIG. 7D shows a state where the agent is looking at the user. Meanwhile, FIGS. 7A to 7C and 7E show states where the agent is looking away from the user. In this regard, however, FIGS. 7A to 7C and 7E show states of the agent having lines of sight different from each other. The agent images 14 shown in FIGS. 7A to 7E are an example of a change in facial expressions specified by the scenario data 24b.

Here, the PU 22 uses the 2D model and the 3D model together, instead of generating an entire agent image 14 by using the 3D model. That is, image data indicating the agent image 14 is generated by using the 3D model for the eyes, mouth, and eyebrows that greatly affect particularly the facial expression of an agent. As a result, computational load can be reduced as compared with a case where an entire head of the agent or the entire head and torso of the agent are texture-mapped to a dedicated 3D model. Meanwhile, if the mouth, eyes, and eyebrows are also 2D models, the computational load can be reduced as compared with the present embodiment. However, in that case, the agent image 14 seems less real.

Therefore, according to the present embodiment, it is possible to achieve a suitable compromise between updating the agent image 14 in real time and maintaining a high level of reality.

According to the present embodiment described above, the following functions and effects can be further obtained.
(1) Of the 3D texture data 24e, a texture of the jaw portion with the mouth open and a texture of the jaw portion with the mouth closed are mapped to a common lower face model 62. As a result, computational load for display can be reduced as compared with a case where the 3D model can be deformed according to opening and closing of the mouth.
(2) The PU 22 determines the position and rotation angle of the 3D model on the basis of the specification data 24f according to a texture selected from the 2D texture data 24d. As a result, the 3D model can be matched even if the posture of the agent represented by the 2D texture data 24d changes. Therefore, the posture of the agent represented by the 2D texture data 24d can be matched with data used for display among the 3D texture data 24e.
(3) The 2D texture data 24d and the 3D texture data 24e are pre-rendered data. As a result, when the agent image 14 is displayed on the display unit 12, time required for rendering can be saved.
(4) Before displaying the agent image 14 on the display unit 12, the PU 22 writes the 2D texture data 24d, the 3D texture data 24e, and the specification data 24f to the storage device 26. Because the operation speed of the storage device 26 is higher than the operation speed of the storage device 24, the agent image 14 can be promptly displayed and updated according to the processing described above.
(5) Different postures and motions of the agent are specified by the scenario data 24b according to an interaction with the user. As a result, the posture and motion of the agent can be appropriate corresponding to the interaction with the user.

### <Correspondence>

Correspondence between the matters in the embodiment described above and the matters set forth in the above-described section "SOLUTIONS TO PROBLEMS" is as follows. Hereinafter, the correspondence is shown by number for each solution set forth in the above-described section "SOLUTIONS TO PROBLEMS". [1,2] The storage device corresponds to the storage devices 24 and 26. The execution device corresponds to the PU 22. The 2D texture data corresponds to the 2D texture data 24d. The 3D texture data corresponds to the 3D texture data 24e. The 2D mapping processing corresponds to the processing in S24. The 3D mapping processing corresponds to the processing in S30, S34, and S38. The display processing corresponds to the processing in S26, S32, S36, S40, and S42. [3] The 3D model data corresponds to the 3D model data 24c. The 3D model data corresponds to that there is only one lower face model 62 shown in FIG. 3. [4] The specification data corresponds to the specification data 24f. [5] Data read from the storage device 24 in the processing in S16 corresponds to pre-rendered data. [6] The first storage device corresponds to the storage device 24. The second storage device corresponds to the storage device 26. The write processing corresponds to the processing in S12 and S14. [7] The 2D selection processing corresponds to the processing in S22. The 3D selection processing corresponds to the processing in S22.

### <Other embodiments>

Note that the present embodiment can be modified as follows. The present embodiment and the following modifications can be implemented in combination within a range not technically contradictory.

### "3D texture data"

- The jaw-portion data 72 described above may be data that does not include a texture of a nose portion.
- In the embodiment described above, the 3D texture data 24e includes the eye-portion data 70 and the j aw-portion data 72, but the present invention is not limited thereto. For example, texture data of eyebrows and texture data of eyes may be different data.
- It is not essential that the 3D texture data 24e include a texture of each of the eyebrows, the eyes, and the mouth. For example, the textures of the eyes and the mouth may be included, but the texture of the eyebrows may not be included.

### "3D model data"

- In the embodiment described above, the 3D model data 24c includes the upper face model 60 and the lower face model 62, but the present invention is not limited thereto. For example, data of the eyebrow portion, data of the eye portion, and data of the jaw portion may be included. Furthermore, for example, as described in the section "3D texture data" described above, the data of the eyebrow portion may be deleted if a texture of the eyebrows is not included. Furthermore, for example, as described in the section "3D texture data" described above, data of the nose portion may be deleted if the texture of the nose portion is not included.
- It is not essential that the 3D model data 24c include data corresponding to each of a plurality of areas of a face. For example, the 3D model data 24c may be a single piece of data related to a partial area of the face.
- The 3D model data is not limited to data that is not deformed. For example, the 3D model data may be data in which the jaw portion can be deformed according to a mouth movement. Furthermore, for example, the 3D model data may be pieces of data different from each other corresponding to some groups of the 2D texture data 24d.
- The polygon is not limited to a polygon having three vertices.

### "Interaction with user"

- The method for interacting with the user is not limited to a method using the scenario data 24b. For example, a mapping that searches a knowledge database for text data related to content of an utterance by the user and the like and outputs the text data may be used. The mapping here may be configured by using, for example, an encoder-decoder model. Furthermore, for example, the mapping may be configured by a neural network including an attention mechanism.

### "2D selection processing and 3D selection processing"

- The 2D selection processing is not limited to processing of selecting data designated by the scenario data 24b in the 2D texture data 24d. For example, as described in the section "Interaction with user", in a case where the agent utters text data searched for from the knowledge database, the 2D selection processing may be processing of selecting data according to content of the utterance.
- The 3D selection processing is not limited to processing of selecting data designated by the scenario data 24b in the 3D texture data 24e. For example, as described in the section "Interaction with user", in a case where the agent utters text data searched for from the knowledge database, the 2D selection processing may be processing of selecting data according to content of the utterance.

### "Storage device"

- In the embodiment described above, the 3D texture data 24e written to the storage device 26 is used in processing such as texture mapping, but the present invention is not limited thereto. For example, the storage device 24 may not be included, and the texture mapping may be performed by using the 3D texture data 24e stored in the storage device 26.

### "Display control device"

- It is not essential that the display control device include a storage device in which the 3D texture data 24e is stored. For example, the storage device 24 may not store the 3D texture data 24e, and, in the processing in S14, the 3D texture data 24e may be received from outside and stored in the storage device 26.

### "Execution device"

- The execution device is not limited to a device that executes software processing such as a CPU, a GPU, or a TPU. For example, the execution device may include a dedicated hardware circuit that performs hardware processing on at least a part of data on which software processing is performed in the embodiment described above. The dedicated hardware circuit may be, for example, an ASIC or the like. That is, the execution device is only required to include a processing circuit having any one of the following configurations (a) to (c). (a) A processing circuit including a processing device that executes all of the above-described processing according to a program, and a program storage device that stores the program. (b) A processing circuit including a processing device that execute a part of the above-described processing according to a program and a program storage device, and a dedicated hardware circuit that executes remaining processing. (c) A processing circuit including a dedicated hardware circuit that executes all of the above-described processing. Here, at least either a software execution device including the processing device and the program storage device, or the dedicated hardware circuit may be plural.

## Claims

1. A display control device comprising a storage device and an execution device,
wherein
the storage device stores 2D texture data that is a plurality of texture data related to an agent, and 3D texture data that is data different from the 2D texture data and is data including texture data of an eye portion and mouth portion of the agent,
the agent is a person who interacts with a user,
the 2D texture data includes a plurality of pieces of data indicating mutually different postures of the agent,
the 3D texture data includes a plurality of pieces of data of an eye portion and mouth portion indicating each of mutually different facial expressions of the agent,
the execution device executes 2D mapping processing, 3D mapping processing, and display processing,
the 2D mapping processing is processing of mapping, to a 2D model, a piece of data selected from among a plurality of posture data included in the 2D texture data,
the 3D mapping processing is processing of mapping, to a 3D model, a piece of data of a facial expression selected from among a plurality of facial expressions included in the 3D texture data, and
the display processing is processing of displaying, on a display unit, image data obtained by combining image data subjected to the 2D mapping processing with image data subjected to the 3D mapping processing.

2. The display control device according to claim 1, wherein the 3D texture data includes a plurality of pieces of data of an eyebrow portion, the plurality of pieces of data indicating each of mutually different facial expressions of the agent.

3. The display control device according to claim 1 or 2,
wherein
the storage device stores 3D model data to which the 3D texture data is mapped,
data of a mouth portion among the 3D texture data includes data of a jaw portion,
data of the jaw portion includes data of a state where a mouth is closed and data of a state where a mouth is open, and
the 3D model to which data of the jaw portion in a state where the mouth is closed is mapped and the 3D model to which data of the jaw portion in a state where the mouth is open is mapped are the same model.

4. The display control device according to any one of claims 1 to 3,
wherein
the storage device stores specification data that is data in which a position and rotation angle of the 3D model are specified for each of mutually different postures of the agent, the postures being indicated by the 2D texture data, and
the 3D mapping processing is processing of mapping the 3D texture data to the 3D model on the basis of the specification data.

5. The display control device according to any one of claims 1 to 4, wherein the 3D texture data stored in the storage device is pre-rendered data.

6. The display control device according to any one of claims 1 to 5,
wherein
the second storage device includes a first storage device and a second storage device,
the first storage device stores the 3D texture data at all times,
the execution device executes write processing,
the write processing is processing of writing, to the second storage device, the 3D texture data stored in the first storage device, and
the 3D mapping processing is processing of mapping the 3D texture data to the 3D model by using the 3D texture data written to the second storage device.

7. The display control device according to any one of claims 1 to 6,
wherein
the execution device executes
2D selection processing of selecting, according to an interaction with the user, data to be utilized for the 2D mapping processing, from among a plurality of pieces of data indicating mutually different postures of the agent, and
3D selection processing of selecting, according to an interaction with the user, data to be utilized for the 3D mapping processing, from among a plurality of pieces of data indicating each of mutually different facial expressions of the agent.
